(19) Europäisches Patentamt
European Patent Office
Office européen des brevets

(11) **EP 4 656 286 A1**

(12) **EUROPEAN PATENT APPLICATION**
published in accordance with Art. 153(4) EPC

(43) Date of publication:
**03.12.2025 Bulletin 2025/49**

(21) Application number: **24780397.6**

(22) Date of filing: **27.03.2024**

(51) International Patent Classification (IPC):
**B01J 20/281** (2006.01) **G01N 30/02** (2006.01)
**G01N 30/88** (2006.01)

(52) Cooperative Patent Classification (CPC):
**B01J 20/281; G01N 30/02; G01N 30/88**

(86) International application number:
**PCT/JP2024/012138**

(87) International publication number:
**WO 2024/204291 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.03.2023 JP 2023049565**

(71) Applicant: Sekisui Medical Co., Ltd.
**Tokyo 103-0027 (JP)**

(72) Inventors:
• **YAMAMOTO, Yosuke**
  **Tokyo 103-0027 (JP)**
• **UEDA, Kazuki**
  **Tokyo 103-0027 (JP)**
• **INABA, Yuuya**
  **Tokyo 103-0027 (JP)**
• **TAIRA, Hiroaki**
  **Tokyo 103-0027 (JP)**

(74) Representative: **Cabinet Beau de Loménie**
  **103, rue de Grenelle / CS 90800**
  **75340 Paris Cedex 07 (FR)**

(54) **FILLER FOR ION EXCHANGE CHROMATOGRAPHY, METHOD FOR PRODUCING SAME, AND METHOD FOR MEASURING HEMOGLOBIN COMPONENT**

(57)     The disclosure provides a packing material for ion exchange chromatography that has very high separation performance even at reduced column pressure and is useful for measurement of hemoglobins, particularly hemoglobin A1c and the like, and a production method that enables efficient and easy production of the packing material. The disclosure also provides a hemoglobin measurement method that enables measurement of hemoglobins with very high accuracy. The packing material of the disclosure is used for ion exchange chromatography, the packing material including core-shell particles, each core-shell particle including a core and a shell covering at least part of the core, and including a cation exchange group on a surface of the shell, the packing material having a CV value (%) of 18% or less, where the CV value is represented by the following formula (1): CV value (%) = (standard deviation of particle size/average particle size) $\times$ 100.

FIG.1

EP 4 656 286 A1

## Description

TECHNICAL FIELD

The present invention relates to a packing material for ion exchange chromatography, a method for producing the same, and a method for measuring hemoglobin.

BACKGROUND ART

Ion exchange liquid chromatography is widely used for analyzing components in analytes in organic chemistry, biochemistry, medicine, and various other fields. This technique separates a target substance utilizing the electrostatic interactions between ion exchange groups in a packing material and ions in the target substance, and can be classified into cation exchange chromatography and anion exchange chromatography. The former separates a cationic substance using a column packing material containing anionic functional groups, which serve as cation exchange groups, whereas the latter separates an anionic substance using a column packing material containing cationic functional groups, which serve as anion exchange groups.

Ion exchange chromatography enables accurate, quick measurement. It is therefore an effective method for separation and analysis of, for example, hemoglobins and various other biological substances. Hemoglobin (also referred to as Hb) is non-enzymatically linked to blood sugar or metabolites thereof (i.e., glycated) to form glycated Hb. HbA, which constitutes most of the total Hb, is glycated to form HbA1. Although HbA1 is technically not all of the glycated hemoglobin, it is often treated as synonymous with glycated hemoglobin in clinical contexts. HbA1 can be classified into A1a, A1b, and A1c. HbA1c among them reflects the average sugar level in blood over the past one to two months and thus is a common test item for screening for diabetes or for checking how diabetic patients are managing their blood sugar levels. Other known Hbs include HbA0, HbA2, HbC, HbD, HbE, HbF, and HbS.

Regarding ion exchange chromatography techniques, Patent Literature 1 discloses a technique of measuring HbA1c using a column packing material that includes a core particle containing a crosslinked polymer, a non-ionic hydrophilic polymer layer polymerized onto the surface of the core particle, and an ion exchange group-containing compound bonded to the polymer layer. Patent Literature 2 discloses a technique of separating HbA0, A2, E, and the like using a packing material obtained by introducing an alkane or an aromatic compound to the surface of a crosslinked polymer particle via oxygen, further introducing a polyether, and introducing a cation exchange group to the other end of the polyether. Patent Literature 3 discloses a carrier for separating HbA0, HbA1c, and the like, wherein the carrier is obtained by adding a polymerizable monomer to a seed polymer, then performing seeded polymerization to provide a swollen polymer, and introducing a cation exchange group to the swollen polymer.

CITATION LIST

- Patent Literature

Patent Literature 1: JP 2010-112794 A
Patent Literature 2: JP 2018-017560 A
Patent Literature 3: JP H3-82963 A

SUMMARY OF INVENTION

- Technical Problem

As stated above, Patent Literatures 1 to 3 propose packing materials and the like for ion exchange chromatography. There is still room for improvement for the packing materials to exhibit sufficiently high separation performance even at low column pressure. There is also room for improvement to more efficiently and easily produce packing materials. For example, Patent Literature 2 discloses in Example 3 that a packing material was obtained by reacting seed particles with a monomer to prepare crosslinked polymer particles, then reacting the polymer particles with benzene methanol and allyl glycidyl ether, and further introducing a sulfonic acid group, and discloses that this material was packed into a column that was used for hemoglobin separation. However, such a technique still has room for improvement in separation performance because some components may be eluted without being clearly separated.

The present invention was made in view of the situation in the art and aims to provide a packing material for ion exchange chromatography that has very high separation performance even at reduced column pressure and is useful for measurement of hemoglobins, particularly hemoglobin A1c and the like, and a production method that enables efficient and easy production of the packing material. The present invention also aims to provide a hemoglobin measurement method that enables measurement of hemoglobins with very high accuracy.

- Solution to Problem

The disclosure 1 relates to a packing material for ion exchange chromatography, the packing material including core-shell particles, each core-shell particle including a core and a shell covering at least part of the core, and including a cation exchange group on a surface of the shell, the packing material having a CV value (%) of 18% or less, where the CV value is represented by the following formula (1):

$$CV \text{ value } (\%) = (\text{standard deviation of particle size/average particle size}) \times 100$$

$$(1).$$

The disclosure 2 relates to the packing material for ion exchange chromatography according to the disclosure 1, wherein the core-shell particles have an average particle size of 3.0 to 10.0 $\mu$m.

The disclosure 3 relates to the packing material for ion exchange chromatography according to the disclosure 1 or 2, wherein the core includes a seed particle.

The disclosure 4 relates to the packing material for ion exchange chromatography according to any one of the disclosures 1 to 3, wherein the shell is formed using a cation exchange group-containing polymerizable monomer.

The disclosure 5 relates to the packing material for ion exchange chromatography according to the disclosure 4, wherein the cation exchange group-containing polymerizable monomer contains a sulfonic acid group and a vinyl group.

The disclosure 6 relates to the packing material for ion exchange chromatography according to any one of the disclosures 1 to 5, which is used for measuring hemoglobin by ion exchange chromatography.

The disclosure 7 relates to a method for measuring hemoglobin by ion exchange chromatography, including using the packing material for ion exchange chromatography according to any one of the disclosures 1 to 6 as a column packing material.

The disclosure 8 relates to the method for measuring hemoglobin according to the disclosure 7, which is a method for measuring at least hemoglobin A1c.

The disclosure 9 relates to the method for measuring hemoglobin according to the disclosure 7, which is a method for simultaneously measuring at least hemoglobin A1c and hemoglobin F.

The disclosure 10 relates to a method for producing the packing material for ion exchange chromatography according to any one of the disclosures 1 to 6, the method including: a step (1) of polymerizing a first composition containing seed particles and a polymerizable monomer; and a step (2) of adding a second composition containing a cation exchange group-containing polymerizable monomer and performing polymerization.

The present invention is described in detail below.

The present inventors made intensive studies on packing materials used for ion exchange chromatography. As a result, the inventors found out that core-shell particles including a core and a shell covering at least part of the core, including a cation exchange group on a surface of the shell, and having a CV value in a predetermined range have very high separation performance even at reduced column pressure. The inventors also found out that among such core-shell particles, those obtained by forming the core by seeded polymerization (such a core is also referred to as a seed core particle) and then forming the shell using a polymerizable monomer (such core-shell particles are also referred to as seed core-shell particles) can have very high separation performance as compared with, for example, particles obtained by forming the core by suspension polymerization and then forming the shell, or particles obtained by surface treatment on seed core particles. The present invention is thus completed.

The packing material for ion exchange chromatography of the present invention (hereinafter also abbreviated as "the packing material") includes core-shell particles. Each core-shell particle includes a core and a shell covering at least part of the core, and includes a cation exchange group on a surface of the shell. The particles may have any shape but preferably have a spherical shape. In particular, the core-shell particles more preferably have a true spherical shape.

Having a true spherical shape herein means that the core-shell particles have an average sphericity of 0.8 or greater.

The sphericity (minor axis/major axis) can be measured by analyzing, using an image analyzer, an electron micrograph captured with a scanning electron microscope (SEM) or a transmission electron microscope (TEM). The average sphericity can be calculated by visually determining the lengths of the minor and major axes of randomly selected 100 particles in the electron micrograph, and determining the average sphericity of the 100 particles.

The packing material has a CV value (also referred to as a CV value of the particle size distribution) of 18% or less, where the CV value is represented by the following formula (1):

$$CV \text{ value } (\%) = (\text{standard deviation of particle size/average particle size}) \times 100 \quad (1).$$

This allows the packing material to have very high separation performance even at reduced column pressure. The CV value is preferably 18.0% or less, more preferably 16.0% or less, still more preferably 15.0% or less, further preferably 14.0% or less, most preferably 12.0% or less. The CV value is also preferably 10.0% or less. Usually, high column pressure necessitates measurement equipment with pressure resistance, which raises concern for malfunction of the parts of the equipment or higher costs. In addition, high column pressure places a heavy load on the packing material, raising concern for the risk of affecting the separation performance or measured values. The packing material of the present invention can eliminate these concerns as it can reduce the column pressure.

The column pressure herein means the liquid pressure of the eluent flowing into the separation column in ion exchange chromatography. Specifically, the column pressure is measured with a pressure gauge provided on the flow path of the eluent flowing into the separation column in the ion exchange chromatograph. The pressure gauge used to measure the column pressure may be any common pressure gauge used in an ion exchange chromatograph. For example, a Bourdon tube pressure gauge, standardized in JIS B7505(1980), is suitable.

The packing material has a standard deviation of the particle size of preferably 1.8 $\mu$m or less, more preferably 1.5 $\mu$m or less, still more preferably 1.2 $\mu$m or less, further preferably 1.0 $\mu$m or less, most preferably 0.9 $\mu$m or less. This can further enhance the effect that the packing material has very high separation performance even at reduced column pressure.

The packing material (i.e., the core-shell particles) more preferably has an average particle size of 1.0 to 10.0 $\mu$m. When the average particle size is within the range, the packing material can have higher separation performance. The lower limit of the average particle size is more preferably 2.0 $\mu$m or more, still more preferably 3.0 $\mu$m or more. The upper limit of the average particle size is more preferably 9.0 $\mu$m or less, still more preferably 8.0 $\mu$m or less. The average particle size of the core-shell particles is preferably in the range of 3 to 10 $\mu$m, more preferably 3.0 to 10.0 $\mu$m, still more preferably 3.0 to 9.0 $\mu$m, particularly preferably 3.0 to 8.0 $\mu$m. Usually, a packing material with a smaller particle size has a larger specific surface area in the column and thus can improve the separation performance, but it may increase the column pressure. The packing material of the present invention, however, can sufficiently reduce the column pressure while exhibiting very high separation performance even with a small particle size in the above range. This makes the packing material significantly useful.

The standard deviation of the particle size and the average particle size of the packing material are both number-based values and can be measured by the following measurement method.

(Measurement of standard deviation of particle size and average particle size)

The particle size distribution is measured using a Coulter counter (tradename Multisizer 4e, 2021, available from Beckman Coulter, Inc.), and the number average particle size and the standard deviation of the particle size are calculated. Here, the particle size distribution is measured using a 10-$\mu$m aperture with a measurable range of 0.2 $\mu$m to 6 $\mu$m, a 30-$\mu$m aperture with a measurable range of 0.6 to 18 $\mu$m, or a 100-$\mu$m aperture with a measurable range of 2.0 to 60 $\mu$m. The aperture to be used is appropriately selected to suit the particle size range of the particles to be measured.

The measurement sample is a dispersion of 1 g of the packing material in 5 mL of pure water. A beaker filled with a measurement electrolyte (tradename ISOTON® II, available from Beckman Coulter, Inc.) is set in the measurement unit of the Coulter counter. While slowly stirring the contents of the beaker, the dispersion is added dropwise to adjust the reading of the concentration meter on the screen of the Coulter counter to 5 to 10%, and then the measurement is started. During the measurement, the contents of the beaker is slowly stirred. The measurement is terminated when 100,000 particles have been measured.

The packing material preferably has a cation exchange capacity of 0.1 to 150 $\mu$eq/gel mL, more preferably 0.1 to 100 $\mu$eq/gel mL. This further enhances the separation performance of the packing material. The lower limit of the cation exchange capacity is more preferably 1 $\mu$eq/gel mL or more, still more preferably 10 $\mu$eq/gel mL or more, particularly preferably 20 $\mu$eq/gel mL or more, most preferably 40 $\mu$eq/gel mL or more. The upper limit of the cation exchange capacity is more preferably 90 $\mu$eq/gel mL or less, still more preferably 80 $\mu$eq/gel mL or less.

The cation exchange capacity of the packing material herein is determined by the following measurement method.

(Cation exchange capacity measurement)

The target sample (packing material) is packed into a column with an inner diameter of 4.6 mm and a length of 8 mm. A 0.1 mol/L hydrochloric acid solution is passed through the column at a flow rate of 1.0 mL/min for 10 minutes, and then ion-exchanged water is passed therethrough at a flow rate of 1.0 mL/min until the electrical conductivity of the column elution decreases and then stabilizes. Thereafter, a 0.5 mol/L aqueous sodium chloride solution is passed through the column at a flow rate of 1.0 mL/min for one minute, and the eluate is recovered. The cation exchange capacity is measured by automatic titration of the eluate using a 0.01 mol/L aqueous sodium hydroxide solution, with the neutralization point of the electrical conductivity defined as the end point of the titration.

The packing material includes core-shell particles as described above. Each core shell particle includes a core and a shell covering at least part of the core, and includes a cation exchange group on a surface of the shell.

The core may have any shape but preferably has a spherical shape. The core particularly preferably has a true spherical shape.

The core preferably includes a seed particle. The seed particle can be obtained, for example, by polymerizing a monomer by a polymerization method such as dispersion polymerization, emulsion polymerization, soap-free emulsion polymerization, or suspension polymerization. In particular, the seed particle is preferably obtained by soap-free emulsion polymerization. Such a seed particle contains no dispersant or emulsifier. The polymerization conditions are not limited.

The monomer for obtaining the seed particle may be any compound containing a polymerizable group. One or two or more monomers may be used. The polymerizable group preferably contains an unsaturated double bond. Examples thereof include (meth)acryloyl, (meth)acrylamide, vinyl, allyl, ethynyl, and styryl groups. The compound contains one or two or more polymerizable groups. In particular, the compound more preferably contains a (meth)acryloyl group and/or a vinyl group.

The monomer preferably includes at least one monomer selected from the group consisting of an aliphatic monomer containing a linear or branched aliphatic hydrocarbon group and an aromatic monomer.

Examples of the aliphatic hydrocarbon group constituting the aliphatic monomer include methyl, ethyl, propyl, butyl (n-butyl, tert-butyl), pentyl, hexyl, and octyl groups. Preferred among the linear or branched aliphatic hydrocarbon groups is a tert-butyl group. The aliphatic monomer is preferably tert-butyl (meth)acrylate.

The aromatic monomer is preferably one containing a vinyl group and/or a (meth)acryloyl group.

Examples of the aromatic monomer containing a vinyl group include styrene monomers such as styrene, o-methylstyrene, m-methylstyrene, p-methylstyrene, $\alpha$-methylstyrene, dimethylstyrene, ethylstyrene, propylstyrene, p-t-butylstyrene, p-methoxystyrene, p-phenylstyrene, o-chlorostyrene, m-chlorostyrene, p-chlorostyrene, and bromostyrene; monofunctional monomers such as vinylnaphthalene, 4-vinylbiphenyl, and p-styryltrimethoxysilane; and polyfunctional monomers such as divinylbenzene, divinylnaphthalene, and divinylbiphenyl. In particular, the aromatic monomer containing a vinyl group is preferably at least a styrene monomer, more preferably styrene.

Examples of the aromatic monomer containing a (meth)acryloyl group include benzyl (meth)acrylate, phenyl (meth)acrylate, phenylbenzyl (meth)acrylate, phenoxybenzyl (meth)methacrylate, biphenylmethyl (meth)acrylate, and phenol EO-modified (meth)acrylate. Preferred among these are aromatic monomers containing a methacryloyl group. Benzyl (meth)acrylate is preferred, and benzyl methacrylate is more preferred.

The seed particle is preferably a polymer obtained using at least one monomer selected from the group consisting of an aliphatic monomer and an aromatic monomer. In other words, the seed particle is preferably at least one polymer selected from the group consisting of a polymer (a) obtained using only an aliphatic monomer, a polymer (b) obtained using only an aromatic monomer, and a polymer (c) obtained using an aliphatic monomer and an aromatic monomer. Examples of preferred polymers (b) (i.e., aromatic polymers) include styrene polymers such as polystyrene, styrene-sulfonic acid copolymers, styrene-methacrylic acid copolymers, acrylonitrile-butadiene-styrene copolymers. Polystyrene is particularly preferred. Examples of preferable polymers (b) also include aromatic polymers containing a structural unit derived from an aromatic monomer containing a (meth)acryloyl group, such as benzyl (meth)acrylate.

The seed particles preferably have an average particle size of 0.2 to 3.0 $\mu$m. The lower limit of the average particle size is more preferably 0.4 $\mu$m or more. The upper limit of the average particle size is more preferably 2.0 $\mu$m or less. The average particle size of the seed particles is also the number-based value and can be determined by the same method as for the packing material.

The core can be obtained by, for example, polymerizing a first composition containing seed particles and a polymerizable monomer. Specifically, as described in the step (1) described later, the core is preferably obtained by swelling the seed particles with the polymerizable monomer and then polymerizing the polymerizable monomer in the seed particles. The core is suitably obtained by the step (1) described later.

The cores preferably have an average particle size of 1.0 to 10.0 $\mu$m. The lower limit of the average particle size is more preferably 2.0 $\mu$m or more, still more preferably 3.0 $\mu$m or more. The upper limit of the average particle size is more preferably 9.0 $\mu$m or less, still more preferably 8.0 $\mu$m or less. The average particle size of the cores is also the number-based value and can be determined by the same method as for the packing material.

The shell is present on at least part of the surface of the core or on the entire surface of the core. The shell may have any thickness but preferably has a maximum thickness of 5 nm or more, more preferably 20 nm or more, still more preferably 30 nm or more, further preferably 40 nm or more, most preferably 50 nm or more. The maximum thickness of the shell is preferably 1 $\mu$m or less, more preferably 500 nm or less, still more preferably 200 nm or less. The shell may be a single layer or composed of two or more layers. The thickness of the shell can be determined by, for example, subtracting the average particle size of the cores from the average particle size of the core-shell particles.

The shell has a cation exchange group on the surface thereof. Examples of the cation exchange group include sulfonic acid, carboxy, and phosphoric acid groups. Preferred among these are sulfonic acid groups because they allow stable ion dissociation of the target. In other words, the packing material of the present invention preferably includes a core and a shell covering at least part of the core and includes a sulfonic acid group on the surface of the shell.

Unless otherwise specified, "cation exchange group" herein includes a functional group containing a cation exchange group in the narrow sense (e.g., $-SO_3H$, $-COOH$, or $-OPO_3H_2$) at an end thereof. For example, "sulfonic acid group" refers to an entire functional group (sulfonic acid group in the broad sense) in which a sulfonic acid group ($-SO_3H$) in the narrow sense is bound to an alkyl group, such as a sulfoalkyl group.

The amount of the cation exchange group such as a sulfonic acid group on the surface of the shell can be measured by, for example, combustion ion chromatography or time-of-flight secondary ion mass spectrometry (TOF-SIMS).

The shell can be obtained by, for example, after obtaining the core, adding and polymerizing a second composition containing a cation exchange group-containing monomer. Thus, the shell can be suitably obtained by the step (2) described later. In other words, an embodiment in which the shell is formed using a cation exchange group-containing polymerizable monomer is a preferred embodiment of the present invention.

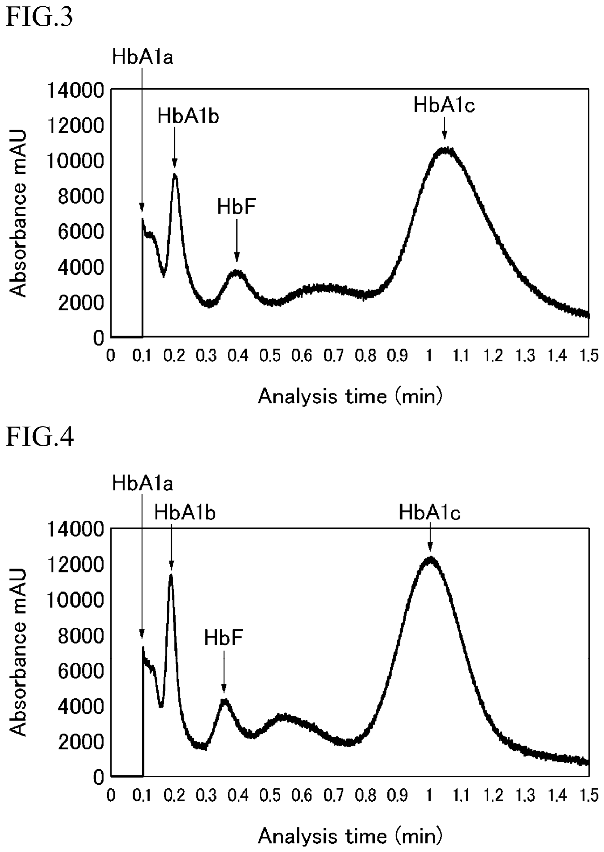

Note that the core-shell particles differ from particles obtained by surface-treatment of the core (also referred to as surface-treated particles). The core-shell particles are produced through the monomer polymerization step after obtaining the core, whereas surface-treated particles are produced by reacting a compound for surface treatment after obtaining the core, without the monomer polymerization step. Therefore, the two types of particles can be distinguished by observing the cross sections of the particles. For example, they are distinguished by thinly slicing a particle of each type with a microtome and observing the cross section with a transmission electron microscope (TEM) or a scanning electron microscope (SEM). The samples for observation may be prepared using an embedding material with reference to, for example, the method disclosed in the known article "Observation of Aqueous Resin Emulsion with Transmission Electron Microscope: Fixation of Core-Shell Type Epoxy Emulsion Particles with Gelatin" (Kobunshi Ronbunsyu, The society of Polymer Science, Japan, published May 25, 2018, vol. 75, No. 3, pp.290-292). To facilitate the structure observation, the samples may be stained using an appropriate stain. Examples of the stain include osmium tetroxides, which are effective for unsaturated polymer materials; ruthenium tetraoxides, which are effective for saturated polymer materials; and phosphotungstic acid, which is effective for polyamides. For these stains and staining methods, see SCAS NEWS (Sumika Chemical Analysis Service, Ltd., published January 24, 2002, No. 15, pp.12 to 14), for example. Other stains may be used. In cross-sectional observation of particles, usually, a surface-treated particle is homogenous within the particle, whereas a core-shell particle can be observed to have layers within the particle (e.g., see Fig. 3 on p.292 of the known article above). In the case of stained particles, a surface-treated particle has little staining unevenness in the cross section, whereas a core-shell particle can be observed with different degrees of staining at the core and shell. Focusing on the particle surface, the surface-treated particle has a large proportion of non-coated portions as compared with the core-shell particle because the component bound by the surface treatment is often distributed in a spot-like (also referred to as island-like) manner on the surface of the particle. In contrast, the core-shell particle has a homogeneous surface.

The packing material of the present invention preferably includes core-shell particles (seed core-shell particles) obtained by forming the core (seed core particle) by seeded polymerization and then forming the shell using the polymerizable monomer. As compared with particles obtained by surface-treatment of seed core particles, the seed core-shell particles can more clearly separate not only HbA1c but also Hbs (e.g., HbA1a, HbA1b, and HbF) with lower retention than HbA1c.

The packing material of the present invention can be produced by, for example, a production method including a step (1) of polymerizing a first composition containing seed particles and a polymerizable monomer; and a step (2) of adding a second composition containing a cation exchange group-containing polymerizable monomer and performing polymerization. This production method can produce particles having a CV value within the above-described range without a classification step, and also allows performing the step (2) continuously following the step (1). The production method thus achieves excellent production efficiency while at the same time providing the packing material with high quality. This production method is thus industrially significantly useful. The production method is another aspect of the invention made by the present inventors.

<Step (1)>

The step (1) involves polymerizing a first composition containing seed particles and a polymerizable monomer. In particular, the step (1) is preferably a seeded polymerization step. In other words, specifically, the step (1) preferably involves swelling the seed particles with the polymerizable monomer and polymerizing the polymerizable monomer in the swollen seed particles. This step suitably provides core particles that serve as the cores of the final packing material. Such cores formed by seeded polymerization are also referred to as seed core particles. The packing material of the present invention particularly preferably includes particles obtained by a production method including a seeded polymerization step.

The seed particles swell by absorbing the polymerizable monomer. To make the seed particles absorb the polymerizable monomer, first, the seed particles are preferably added to an emulsion containing the polymerizable monomer and an aqueous medium. The emulsion can be prepared using a known method. For example, the emulsion can be obtained by adding the polymerizable monomer to the aqueous medium and dispersing the monomer with a fine emulsification device such as a homogenizer, a sonicator, or Nanomizer®. Examples of the aqueous medium include water (alone) and a mixture of water and a water-soluble organic solvent. Examples of the water-soluble organic solvent include, but are not limited to, lower alcohols such as methanol, ethanol, and isopropyl alcohol. From the standpoint of liquid waste disposal, the aqueous medium is preferably water.

The seed particles may be directly added to the emulsion or may be added thereto in the form of dispersion in an aqueous medium. The addition of the seed particles to the emulsion is preferably followed by stirring at room temperature (about 25°C) for 1 to 12 hours. This allows the polymerizable monomer to be suitably absorbed by the seed particles. To promote the absorption of the polymerizable monomer into the seed particles, the emulsion may be warmed to about 30°C to 50°C. Here, the end of the absorption of the polymerizable monomer into the seed particles can be determined by confirming an increase in the particle size by optical microscopy.

The seed particles and the polymerizable monomer are mixed at any ratio. Preferably, the total amount of the polymerizable monomer is preferably 1 to 5,000 parts by mass relative to 1 part by mass of the seed particles. When the mixing ratio is not higher than the upper limit, the seed particles smoothly swell, resulting in improved production efficiency and a more uniform particle size of the final packing material.

The polymerizable monomer to be absorbed into the seed particles may be any compound containing a polymerizable group, and one or two or more compounds may be used. The polymerizable group is as described above.

The polymerizable monomer may be a hydrophobic crosslinkable monomer or a monomer mixture mainly containing a hydrophobic crosslinkable monomer. The use of a hydrophobic crosslinkable monomer enables a highly pressure-resistant packing material and can prevent swelling shrinking.

Examples of the hydrophobic crosslinkable monomer include styrene derivatives such as divinylbenzene, divinyltoluene, divinylxylene, divinylethylbenzene, and divinylnaphthalene; (meth)acrylate derivatives such as ethylene glycol di(meth)acrylate, polyethylene glycol di(meth)acrylate, 1,3-butylene glycol di(meth)acrylate, 1,6-hexane glycol di(meth)acrylate, neopentyl glycol di(meth)acrylate, polypropylene glycol di(meth)acrylate, trimethylolethane tri(meth)acrylate, trimethylolpropane tri(meth)acrylate, tetramethylolpropane tri(meth)acrylate, tetramethylolmethane tri(meth)acrylate, and tetramethylolmethane tetra(meth)acrylate; aliphatic diene compounds such as 1,3-butadiene, isoprene and 1,4-hexanediene; and derivatives of the monomers. Preferred among these are (meth)acrylate derivatives. Each of them may be used alone, or two or more of them may be used in combination.

The polymerization (preferably seeded polymerization) is preferably performed in the presence of a surfactant. The surfactant is not limited but is preferably an anionic surfactant, a nonionic surfactant, or the like. One surfactant may be used alone, or two or more surfactants may be used in combination.

Examples of the anionic surfactant include carboxylic acid compounds (e.g., sodium laurate, sodium myristate, sodium palmitate, sodium stearate, sodium oleate, potassium laurate, potassium myristate, potassium palmitate, potassium stearate, and potassium oleate), alkyl ether carboxylates (e.g., sodium laureth-4 carboxylate), higher alcohol compounds (e.g., sodium lauryl sulfate, ammonium lauryl sulfate, and triethanolamine lauryl sulfate), and sulfonic acid compounds (e.g., disodium lauryl sulfosuccinate, disodium laureth sulfosuccinate, diethylhexyl sodium sulfosuccinate, and sodium lauryl sulfate).

Examples of the nonionic surfactant include ethylene oxide condensation compounds (e.g., polyoxyethylene alkyl ethers, polyoxyethylene steryl ethers, polyoxyethylene polyoxypropylene alkyl ethers, polyoxyethylene fatty acid esters, polyoxyethylene polyalcohol fatty acid esters, and polyoxyethylene sorbitan fatty acid esters), glycol fatty acid esters, sorbitan fatty acid esters, alkyl glycosides. Commercially available products include polyoxyethylene alkyl ether compounds such as EMULGEN® 120, 147, 210, and 420 available from Kao Corporation.

The amount of the surfactant to be used is not limited but is preferably 0.01 to 20 parts by mass relative to 100 parts by mass of the total amount of the polymerizable monomer, for example. With the surfactant in such an amount, the polymerization stability can be increased. In addition, the amount of residual surfactant in the polymerization product can be sufficiently reduced. The amount of the surfactant to be used is more preferably 0.3 to 15 parts by mass.

The polymerization is preferably performed using one or two or more polymerization initiators. Any polymerization initiator may be used, but radical polymerization initiators are preferred. In particular, thermal polymerization initiators are more preferred.

Examples of the thermal polymerization initiators include persulfates such as ammonium persulphate, potassium persulfate, and sodium persulfate; hydrogen peroxide; organic peroxides such as cumene hydroperoxide, di-tert-butyl peroxide, dicumyl peroxide, benzoyl peroxide, lauroyl peroxide, dimethylbis(tert-butyl peroxy)hexane, dimethyl-bis(tert-butyl peroxy)hexyne-3, bis(tert-butyl peroxyisopropyl)benzene, bis(tert-butyl peroxy)trimethylcyclohexane, butyl-bis(tert-butyl peroxy)valerate, tert-butyl peroxy-2-ethylhexanoate, dibenzoyl peroxide, paramenthane hydroperoxide, and tert-butyl peroxybenzoate; and nitrile-azo compounds such as 2,2'-azobisisobutyronitrile, 2,2'-azobis(2-methylbutyronitrile), 2,2'-azobis(2-isopropylbutyronitrile), 2,2'-azobis(2,3-dimethylbutyronitrile), 2,2'-azobis(2,4-dimethylbutyronitrile), 2,2'-azobis(2-methylcapronitrile), 2,2'-azobis(2,3,3-trimethylbutyronitrile), 2,2'-azobis(2,4,4-trimethylvaleronitrile), 2,2'-azobis(2,4-dimethylvaleronitrile), 2,2'-azobis(4-methoxy-2,4-dimethylvaleronitrile), 2,2'-azobis(4-ethoxy-2,4-dimethylvaleronitrile), 2,2'-azobis(4-n-butoxy-2,4-dimethylvaleronitrile), 1,1'-azobis(cyclohexane-1-carbonitrile), 2-(carbamoylazo)isobutyronitrile, and 4,4'-azobis(4-cyanopentanoic acid).

As the polymerization initiator, a redox initiator combining any of the above persulfates or organic peroxides with a reducer may be used. Examples of the reducer include sodium sulfoxylate formaldehyde, sodium hydrogen sulfite, ammonium hydrogen sulfite, sodium thiosulfate, ammonium thiosulfate, hydrogen peroxide, sodium hydroxymethanesulfinate, L-ascorbic acid and salts thereof, cuprous salts, and ferrous salts.

Preferred among the polymerization initiators is at least one selected from the group consisting of 2,2'-azobis(4-methoxy-2,4-dimethylvaleronitrile), 2,2'-azobis(2,4-dimethylvaleronitrile), 2,2'-azobisisobutyronitrile, 2,2'-azobis(2-methylbutyronitrile), 1,1'-azobis(cyclohexane-1-carbonitrile), 4,4'-azobis(4-cyanopentanoic acid), cumene hydroperoxide, di-tert-butyl peroxide, dicumyl peroxide, benzoyl peroxide, and lauroyl peroxide.

The amount of the polymerization initiator(s) to be used is preferably 0 to 5 parts by mass relative to 100 parts by mass of the total amount of the polymerizable monomer. The amount of the polymerization initiator(s) to be used is more preferably 0 to 3 parts by mass, still more preferably 0.2 to 3 parts by mass.

In the polymerization, a dispersant may be added to the polymerization reaction system to stabilize the droplets of the polymerizable monomer or the dispersibility of the seed particles. Examples of the dispersant include organic dispersants such as partially saponified polyvinyl alcohol, polyacrylic acid salts, polyvinylpyrrolidone ,carboxymethylcellulose, and methylcellulose; and inorganic dispersants such as magnesium pyrophosphate, calcium pyrophosphate, calcium phosphate, calcium carbonate, magnesium phosphate, magnesium carbonate, and magnesium oxide. One or two or more of them may be used. When an inorganic dispersant is used, it is preferably used in combination with a surfactant. Preferred among the dispersants are polyvinyl alcohol and/or polyvinylpyrrolidone. The amount of the dispersant to be added is not limited but is preferably 0.3 to 50 parts by mass relative to 100 parts by mass of the polymerizable monomer.

In the polymerization, a water-soluble polymerization inhibitor may also be added to the aqueous medium to reduce the generation of by-products (e.g., resin fine particles with too small particle size) in the aqueous medium in the polymerization reaction. Examples of the polymerization inhibitor include nitrites such as sodium nitrite, sulfites, hydroquinones, ascorbic acids, water-soluble vitamins B, citric acid, polyphenols, and ammonium thiocyanate. The amount of the polymerization inhibitor to be added is preferably 0.002 to 0.2 parts by mass relative to 100 parts by mass of the polymerizable monomer, for example.

Regarding the polymerization conditions, the polymerization temperature and the polymerization time are appropriately selected according to the type of the polymerizable monomer or the type of the optional components such as the polymerization initiator(s). For example, the polymerization temperature is preferably 25°C to 110°C, more preferably 50°C to 100°C. The polymerization time is preferably 1 to 12 hours. The polymerization is preferably performed by increasing the temperature after the polymerizable monomer and the optional polymerization initiator(s) are completely absorbed into the seed particles. The polymerization may be performed under an inert gas (e.g., nitrogen) atmosphere. The step of allowing the seed particles to absorb the polymerizable monomer and polymerizing the monomer may be repeated multiple times.

<Step (2)>

The step (2) involves adding a second composition containing a cation exchange group-containing polymerizable monomer to the product obtained in the step (1) and polymerizing the second composition. The product obtained in the step (1) contains core particles (seed core particles) that serve as the cores of the packing material. The final particles (i.e., packing material of the present invention) to be obtained through the step (2) can be referred to as seed core-shell particles.

The second composition contains one or two or more cation exchange group-containing polymerizable monomers. The cation exchange group-containing polymerizable monomers may be any compounds that contain a cation exchange group such as a sulfonic acid group ($-SO_3H$), a carboxy group (-COOH), or a phosphoric acid group ($-OPO_3H_3$) and a polymerizable group. One or two or more compounds may be used. The polymerizable group is as described above and is particularly preferably a vinyl group. Preferred cation exchange group-containing polymerizable monomers are compounds containing a sulfonic acid group (also referred to as a sulfonic acid group-containing monomers). In particular, compounds containing a vinyl group and a sulfonic acid group are particularly preferred. In other words, an embodiment in which the cation exchange group-containing polymerizable monomer(s) contain a sulfonic acid group and a vinyl group is a preferred embodiment of the present invention.

Examples of preferred compounds containing a vinyl group and a sulfonic acid group include those represented by the following formula (2) or (3):

$$(R^1\text{-}Z)_m\text{-}R^2\text{-}(SO_3H)_n \qquad (2)$$

$$R^4\text{-}(R^2)_p\text{-}(SO_3H)_n \qquad (3)$$

(wherein $R^1$ represents a group represented by $CH_2=C(R^3)\text{-}C(=O)\text{-}$; each $R^3$ may be the same or different and represents a hydrogen atom or a methyl group; Z represents an oxygen atom or an imino group (-NH-); $R^2$ represents a C1-C30 divalent to hexavalent organic residue; $R^4$ represents a group represented by $CH_2=C(R^3)\text{-}$; m is a number of 1 to 4; n is a number of 1 or 2; and p is 0 or 1). Each of the compounds represented by the formula (2) or (3) may be in the form of a salt such as a metal salt (e.g., sodium salt).

In the formula (2), Z preferably represents an imino group. In other words, the sulfonic acid group-containing monomer preferably has a (meth)acrylamide structure. $R^2$ preferably represents a C1-C30 alkyl group, where the carbon number is preferably 1 to 20, more preferably 1 to 10, still more preferably 3 to 5. Preferred among alkyl groups are branched alkyl groups. The numbers m and n are each preferably 1. The compound represented by the formula (2) is particularly preferably acrylamide t-butyl sulfonic acid.

In the formula (3), when p is 1, $R^2$ is preferably a methylene group. p is also preferably 0. n is preferably 1. In other words, the compound represented by the formula (3) is preferably methallylsulfonic acid, allylsulfonic acid, or vinylsulfonic acid. In particular, the compound is more preferably vinylsulfonic acid or methallylsulfonic acid.

The second composition may contain, together with the cation exchange group-containing polymerizable monomer(s), one or two or more other polymerizable monomers. As such other polymerizable monomer(s), for example, at least a compound containing a polymerizable group and exhibiting hydrophilicity (also referred to as a hydrophilic monomer) is preferably used.

Examples of preferred hydrophilic monomers include hydroxyalkyl (meth)acrylates, hydroxyalkyl(meth)acrylamides, (poly)(alkylene glycol) (meth)acrylates, (poly)(alkylene glycol) vinyl ethers, and N-vinylpyrrolidone. The alkyl groups in the hydroxyalkyl (meth)acrylates and hydroxyalkyl(meth)acrylamides preferably have a carbon number of 1 to 30, more preferably 1 to 10, still more preferably 1 to 5. The alkylene glycol groups in the (poly)(alkylene glycol)(meth)acrylates and (poly)(alkylene glycol) vinyl ethers preferably have a carbon number of 1 to 30, more preferably 1 to 10, still more preferably 1 to 5, and the average number of repetitions (mol) of the alkylene glycol groups is preferably 1 to 50, more preferably 2 to 20, still more preferably 5 to 15.

Examples of the hydroxyalkyl (meth)acrylates include hydroxyethyl (meth)acrylate, hydroxypropyl (meth)acrylate, and hydroxybutyl (meth)acrylate. Examples of the hydroxyalkyl(meth)acrylamides include n-hydroxyethyl(meth)acrylamide and hydroxypropyl(meth)acrylamide. Examples of the poly(alkylene glycol) (meth)acrylates include poly(ethylene glycol) (meth)acrylate and poly(propylene glycol) (meth)acrylate. Examples of the (poly)(alkylene glycol) (poly)vinyl ethers include ethylene glycol monovinyl ether, diethylene glycol monovinyl ether, and diethylene glycol divinyl ether. Preferred among the hydrophilic monomers are (poly)(alkylene glycol) (meth)acrylates, more preferred is poly(ethylene glycol) (n = 10) mono(meth)acrylate.

The amount of the cation exchange group-containing polymerizable monomer(s) to be compounded is preferably 5 to 500 parts by mass relative to 100 parts by mass of the core particles obtained in the step (1). This allows the obtained core-shell particles to have a sufficient amount of cation exchange groups on the surface of the shell, thus leading to higher separation performance. The amount of the cation exchange group-containing polymerizable monomer(s) to be compounded relative to 100 parts by mass of the core particles obtained in the step (1) is more preferably 50 to 300 parts by mass. In the case where the cation exchange group-containing monomer(s) and other polymerizable monomer(s) are used in combination, the amount of other polymerizable monomer(s) is preferably 10 to 200 parts by mass, more preferably 50 to 100 parts by mass relative to 100 parts by mass of the cation exchange group-containing monomer(s).

The polymerization in the step (2) is performed continuously following the step (1). Thus, reaction agents such as a polymerization initiator can be already present in the system, but may further be added in the step (2). For example, a polymerization initiator may be further added. The polymerization initiator is as described above; radical polymerization initiators are preferred, and in particular, thermal polymerization initiators are more preferred.

Regarding the polymerization conditions, the polymerization temperature and the polymerization time are appropriately selected according to the type of the polymerizable monomer or the type of the optional components such as the polymerization initiator(s). For example, the polymerization temperature is preferably 25°C to 110°C, more preferably 50°C to 100°C. The polymerization time is preferably 1 to 12 hours. The polymerization may be performed under an inert gas (e.g., nitrogen) atmosphere.

The packing material of the present invention not only has very high separation performance but also can reduce the column pressure. The packing material of the present invention thus can improve the measurement accuracy than conventional column packing materials. Such a method for measuring a sample by ion exchange chromatography (preferably ion exchange liquid chromatography) using the packing material is a preferred embodiment of the present invention. Possible samples to be measured include all the samples measurable by conventional ion exchange chromatography and are not limited. Examples include biological samples such as proteins and nucleic acids; drugs; saccharides; surfactants; and ions. In particular, the packing material is effective for measurement of hemoglobins such as hemoglobin A1c. In other words, the present invention also encompasses a method for measuring hemoglobin by ion exchange chromatography using the packing material as a column packing material. The use of the packing material as a column packing material in measuring hemoglobin by ion exchange chromatography is another preferred embodiment of the present invention.

The ion exchange liquid chromatograph used in the measurement may be a known ion exchange liquid chromatograph such as one composed of a liquid delivery pump, a sampler, a column, a detector, and the like. The chromatograph may appropriately include other accessories (e.g., column thermostat and/or eluent deaeration device). Particularly in hemoglobin measurement, a conventionally known HPLC system can be used that includes a pump for eluent delivery, a sampler, a detector, and the like. In the measurement, a column packed with the packing material of the present invention is connected to such a system, and a blood sample is measured.

In measurements using the packing material, the column pressure is preferably set at 5 MPa or less, for example. The column pressure is more preferably 3 MPa or less, still more preferably 2 MPa or less, most preferably 1.5 MPa or less. The lower limit of the column pressure is not limited. From the standpoint of reducing pressure fluctuations and performing stable measurement, the lower limit is preferably 0.098 MPa or more, for example. The column pressure is more preferably 0.2 MPa or more.

The eluent to be used in the measurement is selected from known eluents used in ion exchange chromatography. Specific examples of eluents include inorganic buffers containing phosphoric acid ,boric acid, and salts thereof; organic acid buffers containing amino acids, citric acid, succinic acid, phthalic acid, and salts thereof; and Good's buffers such as bis-tris(bis(2-hydroxyethyl)iminotris-(hydroxymethyl)methane), N-2-hydroxyethylpiperazine-N'-2-ethanesulfonic acid (HEPES), and 2-(N-morpholino)ethanesulfonic acid (MES). As necessary, any of the following may be added or used alone: salts such as sodium chloride, potassium chloride, sodium sulfate, and sodium hydrogen carbonate; inorganic acids such as hydrochloric acid; organic acids such as acetic acid; bases such as sodium hydroxide and potassium hydroxide; and water-soluble organic solvents such as methanol, ethanol, and acetonitrile.

The eluent concentration is preferably 1 to 1,000 mM, more preferably 5 to 800 mM, depending on other measurement conditions. A mixture of multiple eluents may be used. The eluents may be switched during the course of the measurement, or gradient elution may be performed.

In measurement of hemoglobins such as hemoglobin A1c, the buffer is preferably one having a salt concentration of 10 mM to 1,000 mM. A buffer having a salt concentration of 10 mM or more allows suitable ion exchange reaction and sufficient separation of hemoglobin. A buffer having a salt concentration of 1,000 mM or less can sufficiently prevent salt precipitation.

Notably, the use of the packing material of the present invention enables clear separation of hemoglobin A1c (also referred to as HbA1c). Moreover, it also enables clear separation of components (e.g., HbA1a, HbA1b, and HbF) having lower retention on the packing material than HbA1c. Therefore, the measurement method is useful as a method for measuring at least one selected from the group consisting of HbA1a, HbA1b, HbA1c, and HbF. In particular, the measurement method is preferable as a method for measuring at least HbA1c and also preferable as a method for simultaneously measuring HbA1c and at least one selected from the group consisting of HbA1a, HbA1b, and HbF. The measurement is also useful as a method for simultaneously measuring at least HbA1c and HbF. Currently, columns for analysis of HbF and the like are sold separately from columns for analysis of HbA1c. Columns for analysis of HbF and the like cannot separate HbA1c, and columns for analysis of HbA1c cannot separate HbF and the like. Therefore, it can be said that the effect of enabling simultaneous measurement of a component with low retention (e.g., HbA1a, HbA1b, HbF) and HbA1c is a very unique effect that could not be achieved with the conventional art, and the effect is technically highly useful.

- Advantageous Effects of Invention

The present invention can provide a packing material for ion exchange chromatography that has very high separation performance even at reduced column pressure and is useful for measurement of hemoglobins, particularly hemoglobin A1c and the like, and a production method that enables efficient and easy production of the packing material. The present invention can also provide a hemoglobin measurement method that enables measurement of hemoglobins with very high accuracy.

BRIEF DESCRIPTION OF DRAWINGS

FIG. 1 is a chromatogram obtained in measurement of hemoglobins performed using the packing material of Example 1.

FIG. 2 is an enlarged view of the analysis time range from 0 to 1.5 min in the chromatogram shown in FIG. 1.

FIG. 3 is an enlarged view of the analysis time range from 0 to 1.5 min in a chromatogram obtained in measurement of hemoglobins performed using the packing material of Example 2.

FIG. 4 is an enlarged view of the analysis time range from 0 to 1.5 min in a chromatogram obtained in measurement of hemoglobins performed using the packing material of Example 3.

FIG. 5 is an enlarged view of the analysis time range from 0 to 1.5 min in a chromatogram obtained in measurement of hemoglobins performed using the packing material of Example 4.

FIG. 6 is an enlarged view of the analysis time range from 0 to 1.5 min in a chromatogram obtained in measurement of hemoglobins performed using the packing material of Example 5.

FIG. 7A is an image of the packing material of Example 1 observed with a transmission electron microscope (TEM) after being sliced using an ultramicrotome and stained with osmium tetroxide.

FIG. 7B is an enlarged image of FIG. 7A.

DESCRIPTION OF EMBODIMENTS

In the following, the present invention is described in more detail with reference to examples. The present invention should not be limited to these examples. Unless otherwise specified, "%" refers to "% by mass". The method for measuring the standard deviation of the particle size and the average particle size of the packing material and the method for measuring the cation exchange capacity are as described above. The preparation of columns and measurement of Hbs were performed as follows.

(Column preparation)

Each packing material was packed into a stainless steel container with an inner diameter of 4.6 mm and a length of 8 mm to give a column. This column was connected to a HPLC system (LC-20A, available from Shimadzu Corporation), and Hbs were measured as follows.

(Measurement of Hbs)

Elution conditions: step gradient elution was performed using two eluents, an eluent A (succinate buffer: pH5) and an eluent B (300 mM phosphate buffer: pH7). The concentration of the eluent A was adjusted such that HbA1c would have the same retention time on each packing material.

Flow rate: 1.5 ml/min
Detection wavelength: 415 nm
Analyte: healthy human blood diluted 300-fold with a pH 7 phosphate buffer containing surfactant

(Example 1)

Seed particles were synthesized by soap-free emulsion polymerization.

Specifically, first, a reactor equipped with a stirrer was charged with 40 g of benzyl methacrylate (available from FUJIFILM Wako Pure Chemical Corporation) and 300 g of ion-exchanged water, followed by heating with stirring to increase the temperature to 80°C over one hour under a nitrogen atmosphere. Separately, 0.9 g of potassium persulfate (available from Sigma-Aldrich) was dissolved in 30 g of ion-exchanged water to give an aqueous potassium persulfate solution. After the completion of the temperature increase of the reactor, the aqueous potassium persulfate solution was added to the reactor, and the polymerization was continued for two hours. After the completion of the polymerization, the coagulated components were removed, and a seed particle solution was recovered. The seed particle solution had a solid concentration of 0.5 g/mL, a standard deviation of the particle size of 0.8 $\mu$m, an average particle size of 0.8 $\mu$m, and a CV value of 12.0%.

Ninety grams of tetraethylene glycol dimethacrylate (available from Shin-Nakamura Chemical Co., Ltd.), 120 g of triethylene glycol dimethacrylate (available from Shin-Nakamura Chemical Co., Ltd.), 0.5 g of benzoyl peroxide (available from Kishida Chemical Co., Ltd.), 1.50 g of sodium dodecyl sulfate (available from Kishida Chemical Co., Ltd.) and 100 g of ion-exchanged water were weighed into a 500-mL glass beaker. A stirring bar was placed in the beaker, and the contents of the beaker were mixed with a magnetic stirrer and then stirred with a homogenizer at 15,000 rpm for five minutes for emulsification. The resultant emulsion and 1 mL of the seed particle solution were put in a reactor equipped with a stirrer and then left to stand at room temperature for one hour. A 3% polyvinyl alcohol (available from Mitsubishi Chemical Corporation) aqueous solution (100 g) was added, followed by heating with stirring, and the polymerization was performed under a nitrogen atmosphere at 80°C for one hour, whereby seed core particles were obtained. The seed core particles had an average particle size of 4.471 $\mu$m.

Next, 100 g of 2-(meth)acrylamide-2-methylpropanesulfonic acid (available from Toagosei Co., Ltd.) and 20 g of polyethylene glycol methacrylate (available from NOF Corporation) were dissolved in 300 mL of ion-exchanged water containing 100 g of methanol. The obtained mixture was added to the reactor and polymerized with stirring under a nitrogen atmosphere at 80°C for two hours. The obtained polymerization composition was washed with water and acetone, whereby seed core-shell particles were obtained.

The obtained seed core-shell particles (i.e., packing material) had a standard deviation of the particle size of 0.7 $\mu$m, an average particle size of 4.557 $\mu$m, a CV value of the particle size distribution of 14.3%, and a cation exchange capacity of 50 $\mu$eq/gel mL. The shell layer had a thickness of 0.086 $\mu$m (= 4.557 $\mu$m - 4.471 $\mu$m).

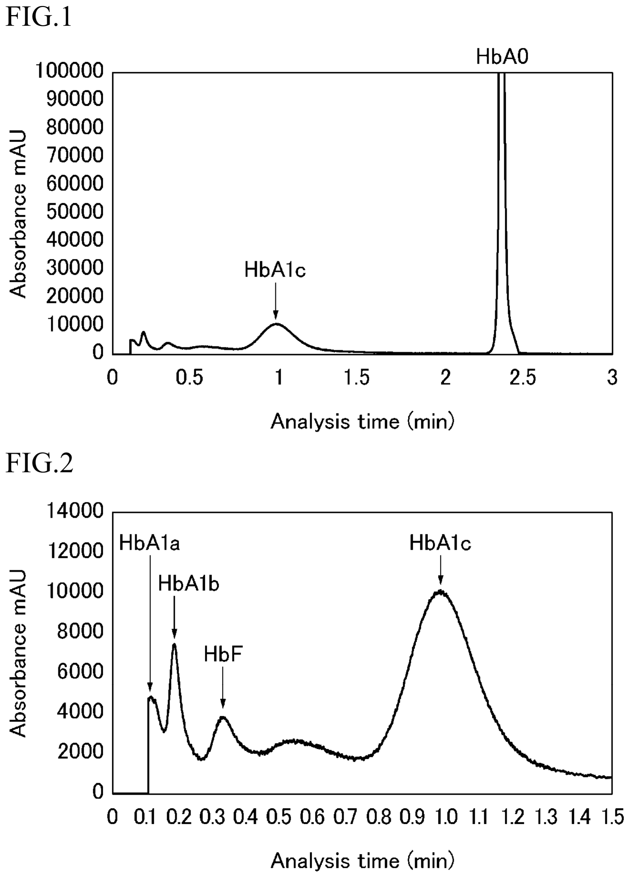

The obtained packing material was packed into a column. This column was used to measure the analyte. The column pressure was as shown in Table 1. The obtained chromatogram was shown in FIG. 1 and FIG. 2. In FIG. 1, Peak 1 corresponds to HbA1c. HbA1c was separated well from other hemoglobin fractions in a short time. FIG. 1 is a chromatogram obtained in the measurement of hemoglobins performed using the packing material of Example 1. FIG. 2 is an enlarged view of the analysis time range from 0 to 1.5 min in the chromatogram shown in FIG. 1.

The number of theoretical plates N of the column was calculated using a half width method. Specifically, it was calculated based on the obtained chromatogram using the following formula (4). Table 1 shows the results.

$$\text{Number of theoretical plates N} = 5.54 \times (t_R/W_{0.5h})^2 \quad (4)$$

Here, $t_R$ represents the retention time (s) of the HbA1c peak, and $W_{0.5h}$ represents the peak width at the midpoint of the HbA1c peak height.

(Example 2)

Seed core particles were obtained as in Example 1 except that 10 g of tetraethylene glycol dimethacrylate, 80 g of triethylene glycol dimethacrylate, 0.6 g of benzoyl peroxide, 1.00 g of sodium dodecyl sulfate, 500 g of ion-exchanged water, and 0.4 mL of the seed particle solution were used. The seed core particles had an average particle size of 6.020 $\mu$m.

Next, seed core-shell particles were obtained as in Example 1 except that 90 g of 2-(meth)acrylamide-2-methylpropanesulfonic acid and 10 g of polyethylene glycol methacrylate were dissolved in 200 mL of ion-exchanged water containing 100 g of methanol.

The obtained seed core-shell particles had a standard deviation of the particle size of 0.9 $\mu$m, an average particle size of 6.118 $\mu$m, a CV value of the particle size distribution of 15.0%, and a cation exchange capacity of 98 $\mu$eq/gel mL. The shell layer had a thickness of 0.098 $\mu$m (= 6.118 $\mu$m - 6.020 $\mu$m).

(Example 3)

Seed core particles were obtained by polymerization as in Example 2 except that the amount of the seed particle solution added was 0.65 mL. The seed core particles had an average particle size of 6.830 $\mu$m.

Seed core-shell particles were obtained as in Example 2. The obtained seed core-shell particles had a standard deviation of the particle size of 1.0 $\mu$m, an average particle size of 6.950 $\mu$m, a CV value of the particle size distribution of 14.2%, and a cation exchange capacity of 54 $\mu$eq/gel mL. The shell layer had a thickness of 0.120 $\mu$m (= 6.950 $\mu$m - 6.830 $\mu$m).

(Example 4)

Seed core particles were obtained by polymerization as in Example 1 except that 5 g of tetraethylene glycol dimethacrylate, 25 g of triethylene glycol dimethacrylate, 0.3 g of benzoyl peroxide, 1.00 g of sodium dodecyl sulfate, and 0.12 mL of the seed particle solution were used. The seed core particles had an average particle size of 4.947 $\mu$m.

Next, seed core-shell particles were obtained as in Example 1 except that 70 g of 2-(meth)acrylamide-2-methylpropanesulfonic acid and 30 g of polyethylene glycol methacrylate were dissolved in 200 mL of ion-exchanged water containing 100 g of methanol.

The obtained seed core-shell particles had a standard deviation of the particle size of 0.6 $\mu$m, an average particle size of 4.989 $\mu$m, a CV value of the particle size distribution of 11.2%, and a cation exchange capacity of 45 $\mu$eq/gel mL. The shell layer had a thickness of 0.042 $\mu$m (= 4.989 $\mu$m - 4.947 $\mu$m).

(Example 5)

Seed core particles were obtained by polymerization as in Example 4 except that the amount of sodium dodecyl sulfate added was 0.2 g. The seed core particles had an average particle size of 4.917 $\mu$m.

The obtained seed core-shell particles had a standard deviation of the particle size of 0.9 $\mu$m, an average particle size of 4.992 $\mu$m, a CV value of the particle size distribution of 17.3%, and a cation exchange capacity of 63 $\mu$eq/gel mL. The shell layer had a thickness of 0.075 $\mu$m (= 4.992 $\mu$m - 4.917 $\mu$m).

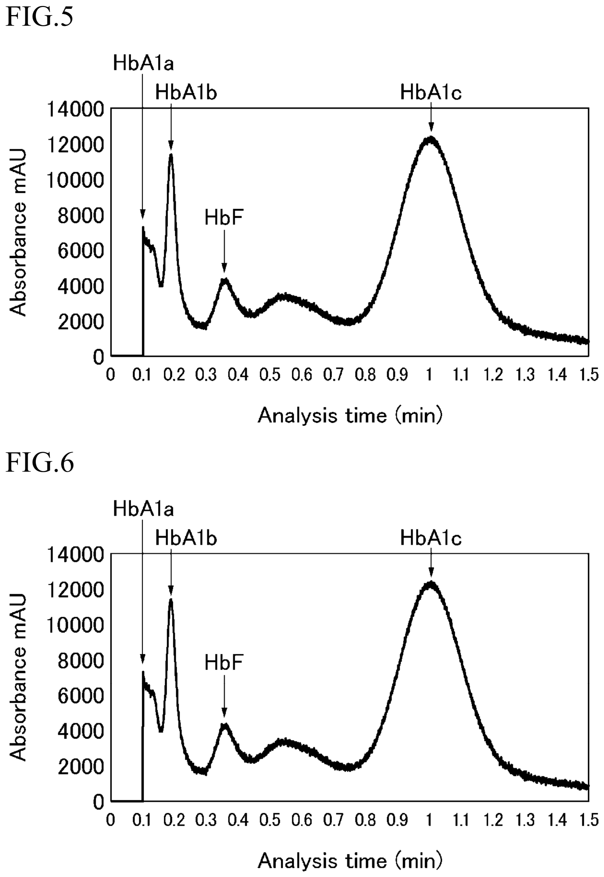

Each of the packing materials obtained in Examples 2 to 5 was packed into a column. This column was used to measure the analyte. The column pressure was as shown in Table 1. The obtained chromatograms were shown in FIGs. 3 to 6. In each of FIGs. 3 to 6, the highest peak appearing near an analysis time of 1 min corresponds to HbA1c. HbA1c was separated well from other hemoglobin fractions in a short time as in the case of the analyte measurement using the packing material obtained in Example 1. FIGs. 3 to 6 are enlarged views of the analysis time range from 0 to 1.5 min in the chromatograms obtained in the measurements of hemoglobins using the packing materials of Examples 2 to 5.

(Comparative Example 1)

A reactor equipped with a stirrer was charged with a mixture of a 3% aqueous polyvinyl alcohol (available from Mitsubishi Chemical Corporation) solution, 300 g of tetraethylene glycol dimethacrylate (available from Shin-Nakamura Chemical Co., Ltd.), 100 g of triethylene glycol dimethacrylate (available from Shin-Nakamura Chemical Co., Ltd.), and 1.0 g of benzoyl peroxide (available from Kishida Chemical Co., Ltd.). The mixture was heated with stirring and polymerized under a nitrogen atmosphere at 80°C for one hour. Next, 100 g of 2-(meth)acrylamide-2-methylpropanesulfonic acid (available from Toagosei Co., Ltd.) and 20 g of polyethylene glycol methacrylate were dissolved in 300 mL of ion-exchanged water containing 100 g of methanol. The obtained mixture was added to the reactor and polymerized with stirring under a nitrogen atmosphere at 80°C for two hours. The obtained polymerization composition was washed with water and acetone, whereby a packing material was obtained.

The obtained packing material had a standard deviation of the particle size of 2.1 $\mu$m, an average particle size of 9.040 $\mu$m, a CV value of the particle size distribution of 23.2%, and a cation exchange capacity of 40 $\mu$eq/gel mL.

The obtained packing material was packed into a column, and the column was used to measure the analyte. The column pressure was as shown in Table 1. Based on the obtained chromatogram (not shown), the number of theoretical plates N was also calculated. Table 1 shows the results.

(Comparative Example 2)

A packing material was obtained by polymerization as in Comparative Example 1 except that the concentration of the aqueous polyvinyl alcohol solution was 5%.

The obtained packing material had a standard deviation of the particle size of 1.5 $\mu$m, an average particle size of 5.960 $\mu$m, a CV value of the particle size distribution of 25.2%, and a cation exchange capacity of 60 $\mu$eq/gel mL.

The obtained packing material was packed into a column, and the column was used to measure the analyte. The column pressure was as shown in Table 1. Based on the obtained chromatogram (not shown), the number of theoretical plates N was also calculated. Table 1 shows the results.

(Comparative Example 3)

A packing material was obtained by polymerization as in Comparative Example 1 except that the concentration of the aqueous polyvinyl alcohol solution was 7%.

The obtained packing material had a standard deviation of the particle size of 0.7 $\mu$m, an average particle size of 3.684 $\mu$m, a CV value of the particle size distribution of 19.0%, and a cation exchange capacity of 75 $\mu$eq/gel mL.

The obtained packing material was packed into a column, and the column was used to measure the analyte. The column pressure was as shown in Table 1. Based on the obtained chromatogram (not shown), the number of theoretical plates N was also calculated. Table 1 shows the results.

[Table 1]

| | Unit | Example 1 | Example 2 | Example 3 | Example 4 | Example 5 | Comparative Example 1 | Comparative Example 2 | Comparative Example 3 |
|---|---|---|---|---|---|---|---|---|---|
| Average particle size | $\mu$m | 4.557 | 6.118 | 6.950 | 4.989 | 4.992 | 9.040 | 5.960 | 3.684 |
| Standard deviation of particle size | $\mu$m | 0.7 | 0.9 | 1.0 | 0.6 | 0.9 | 2.1 | 1.5 | 0.7 |
| CV value | % | 14.3 | 15.0 | 14.2 | 11.2 | 17.3 | 23.2 | 25.2 | 19.0 |
| Column pressure | MPa | 1.00 | 1.07 | 0.59 | 0.75 | 1.05 | 1.00 | 1.88 | 5.10 |
| Number of theoretical plates | - | 90 | 83 | 75 | 93 | 96 | 68 | 125 | 151 |

As shown in Comparative Examples 1 to 3, increasing the particle size of the packing material to decrease the column pressure resulted in a smaller number of theoretical plates. Meanwhile, the packing material obtained in Example 1, when used in the measurement, provided a greater number of theoretical plates than that of Comparative Example 1, while the pressure was similar to that of Comparative Example 1. In other words, the number of theoretical plates calculated in Example 1 was clearly greater than that of Comparative Example 1 at the same column pressure. It indicates that the separation performance was improved. This is presumably because the CV value of the particle size distribution was smaller than that obtained by suspension polymerization. It can be seen that also in Examples 2 to 5, CV values of the particle size distribution of 18% or less (preferably 18.0% or less) resulted in lower column pressures than in the comparative examples with close average particle sizes. Moreover, in all of Examples 2 to 5, the number of theoretical plates was greater than in Comparative Example 1.

The analyte measurements using any of the packing materials obtained in Examples 1 to 5 as the column packing material not only separated HbA1c at high resolution but also clearly separated HbA1a, HbA1b, and HbF (see FIG. 1 to FIG. 6). Thus, the use of packing material of the present invention provided the unexpected effect of well separating not only HbA1c but also components with lower retention than HbA1c, such as HbA1a, HbA1b, and HbF. Here, in measurement of human blood using the packing material disclosed in Patent Literature 2 as the column packing material, HbA1c and HbF were not clearly separated (not shown). Because of the packing material according to the present application, not only can HbA1c be separated at high resolution but HbA1a, HbA1b, and HbF can also be clearly separated while at the same time the column pressure is kept low.

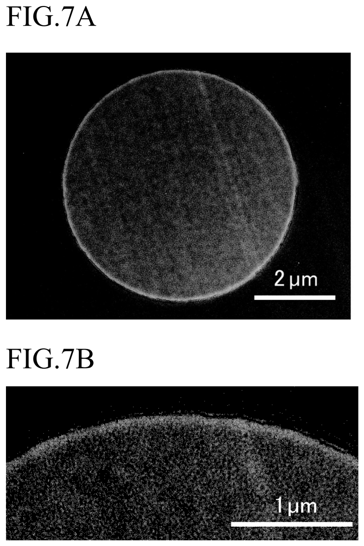

The packing material of Example 1 was embedded in epoxy resin, then sliced with an ultramicrotome (available from Leica, model: EM UC7), and stained with a 1% osmium tetroxide solution diluted with a 0.1 M sodium phosphate buffer. The packing material was then observed with a transmission electron microscope (available from Hitachi High-Technologies Corporation, device name: HT7800, model: 6149-02). FIG. 7A and FIG. 7B show images observed at a magnification of 6,000x. As can be seen from FIG. 7A and FIG. 7B, the core appeared darker, while the shell appeared brighter in the contrast images. The shell had a thickness of about 80 nm.

**Claims**

1. A packing material for ion exchange chromatography,

   the packing material comprising
   core-shell particles, each core-shell particle including a core and a shell covering at least part of the core, and including a cation exchange group on a surface of the shell,
   the packing material having a CV value (%) of 18% or less, where the CV value is represented by the following formula (1):

$$\text{CV value (\%)} = (\text{standard deviation of particle size/average particle size}) \times 100$$

   $$(1).$$

2. The packing material for ion exchange chromatography according to claim 1,
   wherein the core-shell particles have an average particle size of 3.0 to 10.0 $\mu$m.

3. The packing material for ion exchange chromatography according to claim 1 or 2,
   wherein the core includes a seed particle.

4. The packing material for ion exchange chromatography according to claim 1, 2, or 3,
   wherein the shell is formed using a cation exchange group-containing polymerizable monomer.

5. The packing material for ion exchange chromatography according to claim 4,
   wherein the cation exchange group-containing polymerizable monomer contains a sulfonic acid group and a vinyl group.

6. The packing material for ion exchange chromatography according to claim 1, 2, 3, 4, or 5,
   which is used for measuring hemoglobin by ion exchange chromatography.

7. A method for measuring hemoglobin by ion exchange chromatography, comprising

using the packing material for ion exchange chromatography according to claim 1, 2, 3, 4, 5, or 6 as a column packing material.

8. The method for measuring hemoglobin according to claim 7, which is a method for measuring at least hemoglobin A1c.

9. The method for measuring hemoglobin according to claim 7, which is a method for simultaneously measuring at least hemoglobin A1c and hemoglobin F.

10. A method for producing the packing material for ion exchange chromatography according to claim 1, 2, 3, 4, 5, or 6, the method comprising:

a step (1) of polymerizing a first composition containing seed particles and a polymerizable monomer; and a step (2) of adding a second composition containing a cation exchange group-containing polymerizable monomer and performing polymerization.

FIG.1

FIG.2

FIG.3

FIG.4

FIG.5

FIG.6

FIG.7A

2 μm

FIG.7B

1 μm

## INTERNATIONAL SEARCH REPORT

| International application No. |
|---|
| **PCT/JP2024/012138** |

| A. | CLASSIFICATION OF SUBJECT MATTER |
|---|---|

***B01J 20/281***(2006.01)i; ***G01N 30/02***(2006.01)i; ***G01N 30/88***(2006.01)i
FI: B01J20/281 G; G01N30/88 Q; G01N30/02 B; B01J20/281 X

According to International Patent Classification (IPC) or to both national classification and IPC

| B. | FIELDS SEARCHED |
|---|---|

Minimum documentation searched (classification system followed by classification symbols)

B01J20/281; G01N30/02; G01N30/88

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2020-44496 A (HITACHI CHEMICAL COMPANY, LTD.) 26 March 2020 (2020-03-26) claims, examples | 1, 3-5 |
| X | WO 2012/128276 A1 (SEKISUI MEDICAL CO., LTD.) 27 September 2012 (2012-09-27) claims, paragraphs [0015], [0024], [0030] | 1-2, 4-9 |
| X | JP 2009-133654 A (SEKISUI CHEMICAL CO., LTD.) 18 June 2009 (2009-06-18) claims, paragraphs [0030]-[0048], fig. 1 | 1-2, 4-9 |
| X | JP 7-27754 A (MITSUBISHI CHEMICAL CORPORATION) 31 January 1995 (1995-01-31) claims, examples | 1-4, 10 |
| A | JP 2007-535584 A (LANXESS DEUTSCHLAND GMBH) 06 December 2007 (2007-12-06) entire text | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 April 2024** | **07 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/012138**

| Patent document cited in search report | | | Publication date (day/month/year) | Patent family member(s) | | | Publication date (day/month/year) |
|---|---|---|---|---|---|---|---|
| JP | 2020-44496 | A | 26 March 2020 | (Family: none) | | | |
| WO | 2012/128276 | A1 | 27 September 2012 | US claims, paragraphs [0025], [0056]-[0059] | 2014/0020454 | A1 | |
| | | | | EP | 2690435 | A1 | |
| | | | | CN | 103443622 | A | |
| JP | 2009-133654 | A | 18 June 2009 | (Family: none) | | | |
| JP | 7-27754 | A | 31 January 1995 | (Family: none) | | | |
| JP | 2007-535584 | A | 06 December 2007 | US entire text | 2008/0096987 | A1 | |
| | | | | WO | 2005/075530 | A2 | |
| | | | | CN | 1938351 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010112794 A
- JP 2018017560 A

- JP H382963 A

**Non-patent literature cited in the description**

- Observation of Aqueous Resin Emulsion with Transmission Electron Microscope: Fixation of Core-Shell Type Epoxy Emulsion Particles with Gelatin. Kobunshi Ronbunsyu. The society of Polymer Science, 25 May 2018, vol. 75, 290-292

- SCAS NEWS. Sumika Chemical Analysis Service, Ltd., 24 January 2002, 12-14